(19) Europäisches Patentamt
European Patent Office
Office européen des brevets

(11) Veröffentlichungsnummer: **0 044 508**
**B2**

(12) **NEUE EUROPÄISCHE PATENTSCHRIFT**

(45) Veröffentlichungstag der neuen Patentschrift: **18.04.90**

(21) Anmeldenummer: **81105507.8**

(22) Anmeldetag: **14.07.81**

(51) Int. Cl.⁵: **C 08 F 220/58,** C 08 F 220/56, C 08 F 226/02, E 21 B 43/22, C 10 G 1/00 // (C08F220/58, 220:56, 226:02),(C08F220/56, 220:58, 226:02),(C08F226/02, 220:56, 220:58)

(54) **Hochmolekular wasserlösliche Copolymerisate, ihre Herstellung und Verwendung.**

(30) Priorität: **19.07.80 DE 3027422**

(43) Veröffentlichungstag der Anmeldung: **27.01.82 Patentblatt 82/04**

(45) Bekanntmachung des Hinweises auf die Patenterteilung: **25.09.85 Patenblatt 85/39**

(45) Bekanntmachung des Hinweises auf die Entscheidung über den Einspruch: **18.04.90 Patentblatt 90/16**

(84) Benannte Vertragsstaaten: **AT DE FR GB IT NL**

(56) Entgegenhaltungen:
**EP-A-0 023 712**
**DE-A-2 803 009**
**DE-B-2 444 108**
**FR-A-2 284 660**
**GB-A-1 439 248**

**Die Akte enthält technische Angaben, die nach dem Eingang der Anmeldung eingereicht wurden und die nicht in dieser Patentschrift enthalten sind.**

(73) Patentinhaber: **CASSELLA Aktiengesellschaft**
**Hanauer Landstrasse 526**
**D-6000 Frankfurt am Main 61 (DE)**

(72) Erfinder: **Engelhardt, Friedrich, Dr.**
**Hünfelderstrasse 20**
**6 Frankfurt am Main 61 (DE)**
Erfinder: **Schmitz, Hermann, Dr.**
**Marbachweg 313**
**6 Frankfurt am Main 1 (DE)**
Erfinder: **Gulden, Walter, Dr.**
**Frankfurterstrasse 70**
**D-6238 Hofheim/TS (DE)**
Erfinder: **Hax, Jörg**
**Hartingstrasse 4**
**D-6200 Wiesbaden (DE)**

(74) Vertreter: **Urbach, Hans-Georg, Dr. et al**
**Hanauer Landstrasse 526**
**D-6000 Frankfurt am Main 61 (DE)**

**EP 0 044 508 B2**

Courier Press, Leamington Spa, England.

**Beschreibung**

Die vorliegende Erfindung betrifft wasserlösliche Copolymerisate, die in statistischer Verteilung zu 5 bis 60 Gew.% aus Resten der Formel I

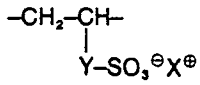

(I)

2 bis 40 Gew.% aus Resten der Formel II

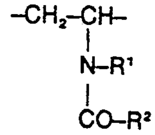

(II)

und 38 bis 93 Gew.% aus Resten der Formel III

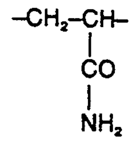

(III)

bestehen, sowie deren durch Partialhydrolyse erhältliche Derivate, wobei $R^1$ und $R^2$ gleich oder verschieden sind und Wasserstoff, Methyl, Ethyl oder ggf. zusammen auch Trimethylen, Y den Rest $—CO—NH—C(CH_3)_2—CH_2—$ oder eine direkte Bindung und $X^{\oplus}$ ein Kation bedeuten, ihre Herstellung und ihre Verwendung als Hilfsmittel beim Entölen von mineralölhaltigen Sand- und Gesteinsamassen.

Ein bislang noch nicht befriedigend gelöstes technisches Problem ist die Entölung von mineralölhaltigen Sand- und Gesteinsmassen. Mineralölhaltige Sand- und Gesteinsmassen liegen in Erdöllagerstätten vor und halten normalerweise das darin enthaltene Mineralöl hartnäckig zurück.

In kleinem Massstab ist eine Extraktion von ölhaltigen Sand- bzw. Gesteinsmassen mit niedrigviskosen organischen Lösungsmitteln, wie z.B. Benzin, Petroläther oder Halogenalkanen, ohne weiteres durchführbar und bringt auch den gewünschten Effekt.

Bei der grossen Menge der vorliegenden mineralölhaltigen anorganischen Massen ist die Extraktion mit organischen Lösungsmitteln jedoch absolut undurchführbar wegen der erforderlichen sehr grossen Mengen an Lösungsmitteln, den mit der Rückgewinnung der Lösungsmittel verbundenen hohen Energiemengen und den unvermeidlichen Lösungsmittelverlusten, die zu einer zusätzlichen Umweltbelastung oder zu besonderen Aufwendungen für die Abluftreinigung führen.

Es ist daher verschiedentlich beschrieben worden, mineralölhaltige Sand- und Gesteinsamassen mit Wasser durchzuspülen, um das Mineralöl mechanisch auszutreiben.

Dieses Verfahren gestattet es jedoch nicht, das gesamte in den Massen enthaltene Mineralöl auszutreiben. Der weitaus grösste Teil bleibt vielmehr haften, weil das Wasser nicht die Haftkräfte zwischen Öl und Stein und die Kapillarkräfte, allgemein die sogenannten Rückhaltkräfte, überwinden kann und sich Kanäle schafft, durch die es wirkungslos abfliesst. Ein wesentlicher Grund dafür sind die unterschiedlichen Grenzflächenspannungen zwischen Sand bzw. Gestein und Öl einerseits und Wasser andererseits und die häufig sehr grossen Viskositätsdifferenzen zwischen Öl und Wasser. Beim Wasserfluten von Erdöllagerstätten ist daher bereits versucht worden, oberflächenaktive Mittel, wie z.B. Alkansulfonate und/oder Verdicker auf Basis von wasserlöslichen Polymerisaten oder von Polysaccharidderivaten als Hilfsmittel einzusetzen (sog. chemisches Fluten, Tertiärförderung).

Es hat sich jedoch gezeigt, dass an derartige chemische Mittel über die Tensid- bzw. Verdickerwirkung hinaus so vielfältige, hohe Andorderungen gestellt werden, dass die bisher verwendeten Produkte noch sehr viel zu wünschen übrig lassen. Ein besonderer Nachteil derbisher bekannten Hilfsmittel besteht darin, dass sie ihre Wirksamkeit in Gegenwart von Elektrolyten weitgehend verlieren. Der Einsatz des unbegrenzt zu Verügung stehenden Meerwassers für das Fluten von mineralölhaltigen Formationen ist damit ausgeschlossen. Es ist daher von einem Entlungshilfsmittel zu fordern, dass es auch in Gegenwart von Elektrolyten wirksam ist, eine Forderung, die für die Entlölung von Erdölfeldern offshore von besonders grosser Wichtigkeit ist.

Wie Modellversuche zeigen, bei denen mineralölhaltige Sand- oder Gesteinspackungen entölt werden und die durch die Praxis bestätigt werden, kommt es noch wesentlich darauf an, dass die Spülflüssigkeit eine gute Injizierbarkeit aufweist, d.h., dass sich die Durchströmung poröser Materialien nach der Zeit möglichst wenig ändert ud dass sie auch bei verscbiedenen Schergefällen ein optimales rheologisches Verhalten aufweist.

Beim Einsatz der Entölungshilfsmittel auf dem Gebeiet der Erdölförderung ist es erforderlich, dass die Produkte auch bei den hohen Lagerstättentemperaturen lange Zeit beständig und wirksam sind, die Lagerstätte nicht schädigen und auch in Gegenwart hoher Elektrolytkonzentration wirken. Die bisher z.B. aus der US—A—2 775 557 und den DE—C—1 300 481 und 2 444 208 bekannten und als Verdicker wirkenden Polymere erfülen gerade in Gezug auf Elektrolytverträglicheit und auf Thermostabilität noch nicht die Erfordernisse der Praxis.

Es wurde nun gefunden, dass man die bisherigen Nachteile beim Entölen mineralölhaltiger Sand- und Gesteinsmassen dadurch besteitigen oder erheblich vermindern kann, dass man dem Spülwasser 20 bis 5000 ppm eines wasserlöslichen Copolymerisats zusetzt, das in statistischer Verteilung zu 5 bis 60 Gew.% aus Resten der Formel I

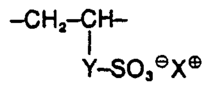 (I)

2 bis 40 Gew.% aus Resten der Formel II

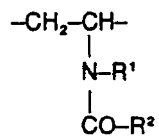 (II)

und 38 bis 93 Gew.% aus Resten der Formel III

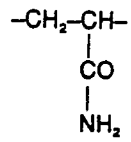 (III)

besteht, oder eines durch Partialhydrolyse dieses Copolymerisats erhältliches Derivats, wobei entweder $R^1$ Wasserstoff und $R^2$ Wasserstoff, Methyl, Ethyl, Y den Rest $—CO—NH—C(CH_3)_2—CH_2—$ oder eine direkte Bindung und $X^{\oplus}$ ein Kation bedeuten, oder wobei $R^1$ und $R^2$ gleich oder verschieden sind und Wasserstoff, Methyl, Ethyl oder ggf. zusammen auch Trimethylen, Y den Rest $—CO—NH—C(CH_3)_2—CH_2—$ und $X^{\oplus}$ ein Kation bedeuten, mit Ausnahme der wasserlöslichen Copolymerisate, die in Statistischer Verteilung zu 5 bis 60 Gew.% aus Resten der Formel Ia

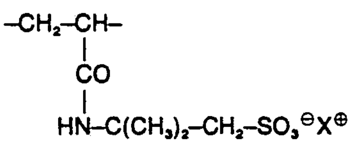 (Ia)

5 bis 40 Gew.% aus Resten der Formel IIa

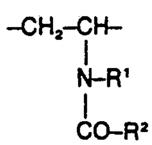 (IIa)

38 bis 80 Gew.% aus Resten der Formel IIIa

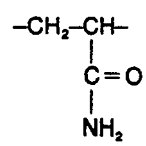 (IIIa)

bestehen, wobei $R^1$ und $R^2$ gleich oder verschieden sind und Wasserstoff, Methyl oder Ethyl bedeuten und $X^{\oplus}$ ein Kation ist und das sich überraschenderweise gegenüber den nächstvergleichbaren, aus der US—PS 2 775 557 und den DT—PS 1 300 481 und 2 444 108 bekannten Produkten insbesondere durch eine wesentlichen höhere Elektrolyte- und Thermostabilität und damit eine erhöhte Viskositätsstabilität in Meerwasser und hochsalinen Formationswässern (Salzkonzentration bis 25 Gew.% NaCl) auch in Gegenwart mehrwertiger Ionen, insbesondere Erdalkaliionen, sowie durch eine ausgezeichnete Langzeittemperaturstabilität bis etwa 150°C auszeichnet und das daher den bekannten Produkten als Viskositätserhöher für das Entölen von Sand- und Gesteinsmassen beim chemischen Fluten von Erdöl-Lagerstätten erheblich überlegen ist.

Das Kation $X^{\oplus}$ kann sich prinzipiell von jeder wasserlöslichen bekannten Base ableiten, deren Stärke ausreicht, die Sulfogruppen der erfindungsgemäss einzusetzenden Copolymeren zu neutralisieren und die die Wasserlöslichkeit der Copolymeren nicht beeinträchtigt. Die Auswahl kann somit in einfacher bekannter Weise erfolgen.

Zweckmässigerweise bedeutet jedoch $X^{\oplus}$ ein Alkalikation, insbesondnere ein Natrium oder Kaliumkation oder ein Kation der Formel $^{\oplus}HNR^3_3$, wobei die drei Reste $R^3$ gleich oder verschieden sind und für Wasserstoff, Alkyl mit 1 bis 4 C-Atomen oder Hydroxyethyl stehen.

Bevorzugte erindungsgemäss einzusetzenden Copolymerisate bestehen in statistischer Verteilung zu 5 bis 50 Gew.% aus Resten der Formel I, 2 bis 20 Gew.% aus Resten der Formel II und zu 45 bis 90 Gew.% aus Resten der Formel III bzw. deren Hydrolyseprodukte.

Besonders bevorzugte erfindungsgemäss einzustzende Copolymerisate enthalten Reste der Formel I, in denen Y den Rest $—CO—NH—C(CH_3)_2—CH_2—$ bedeutet und Reste der Formel II mit $R^1=R^2=CH_3$. In den durch Partialhydrolyse der erfindungsgemäss einzusetzenden Copolymerisate erhältlichen Derivaten ist ein Anteil von bis zu 60%, vorzugsweise 10—30%, der ursprünglich vorhandenen Reste der Formel III durch Reste der Formel IV

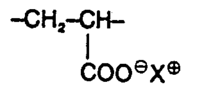

(IV)

ersetzt, wobei $X^{\oplus}$ die obengenannten Bedeutungen hat. Zweckmässigerweise wird im Rahmen dieses Bereichs der Hydrolysegrad umso höher gewählt, je geringer der Sulfonsäuregehalt im Copolymeren ist und umgekehrt.

Bevorzugte erfindungsgemässe Partialhydrolysate enthalten insgesamt 20 bis 60 Gew.% von Gruppen der Formeln I und IV.

Bevorzugt sind auch solche Copolymerisate der angegebenen chemischen Zusammensetzung, die einen hohen Polymerisationsgrad besitzen und die daher in wässriger Lösung besonders hohe Viskositäten zeigen.

Die sehr gute viskositätserhöhende Wirkung der erfindungsgemäss einzusetzenden Copolymerisate und ihrer Partialhydrolysate in konzentrierten Salzlösungen und ihre Temperaturstabilität wird in vielen Fällen durch Anwesentheit von Borat-Anionen noch weiter erhöht. Diese vorteilhaften, Borat-Anionen enthaltenden Copolymerisate und deren Partialhydrolysate enthalten, berechnet als $H_3BO_3$, 2,5 bis 35 Gew.%, vorzugsweise 5 bis 25 Gew.%, Borat-Anionen, bezogen auf das Gewicht der unverseiften Polymeren.

Ausser auf den günstigen Eigenschaften der im Copolymer enthaltenen funktionellen Gruppen und dem Einfluss eines hoben Polymerisationsgrades, der sich insbesondere bei der Herstellung der Copolymeren durch Gelpolymerisation ergibt, beruhen die gegenüber den bisher bekannten Copolymeren erheblich höheren Viskositäten in konz. Salzlösungen sowie die Temperaturstabilität vermutlich auf einer zusätzlichen Interaktion der Borat-Anionen mit den Ketten der Copolymeren.

Besonders bevorzugt sind solche erfindungsgemässen und erfindungsgemäss einzusetzenden Copolymerisate, die mehrere bezorzugte Merkmale aufweisen.

Erfindungsgemäss einzusetzende wasserlösliche Copolymerisate, die in statistischer Verteilung zu 5 bis 60 Gew.% aus Resten der Formel I

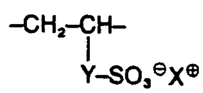

(I)

2 bis 40 Gew.% aus Resten der Formel II

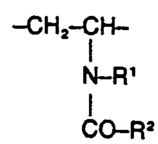

(II)

und 38 bis 93 Gew.% aus Resten der Formel III

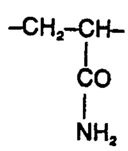

(III)

bestehen, sowie deren durch Partialhydrolyse erhältliche Derivate, wobei entweder $R^1$ Wasserstoff und $R^2$ Wasserstoff, Methyl, Ethyl, Y den Rest $—CO—NH—C(CH_3)_2—CH_2—$ oder eine direkte Bindung und $X^{\oplus}$ ein Kation bedeuten, oder wobei $R^1$ und $R^2$ gleich oder verschieden sind und Wasserstoff, Methyl, Ethyl oder ggf. zusammen auch Trimethylen, Y den Rest $—CO—NH—C(CH_3)_2—CH_2—$ und $X^{\oplus}$ ein Kation bedeuten, sind bisher nicht bekanntgeworden.

Mit Ausnahme der waserlöslichen Copolymerisate, die in statistischer Verteilung zu 5 bis 60 Gew.% aus Resten der Formel Ia

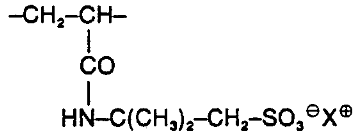

(Ia)

5 bis 40 Gew.% aus Resten der Formel IIa

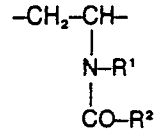

(IIa)

38 bis 80 Gew.% aus Resten der Formel IIIa

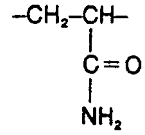

(IIIa)

bestehen, wobei $R^1$ und $R^2$ gleich oder verschieden sind und Wasserstoff, Methyl oder Äthyl bedeuten und $X^{\oplus}$ ein Kation ist, welche bereits Gegenstand der älteren Patentanmeldung Nr. 80 104 556.8 (EP—A—0 023 712) sind, sind die bisher nicht bekannten erfindungsgemäss einzusetzenden wasserlöslichen Copolymerisate neu und ebenfalls Gegenstand dieser Erfindung.

Die Herstellung wasserlöslicher Polymerisate, welche Sulfonsäuregruppen im Makromolekül eingebaut enthalten, ist bereits in zahlreichen Patenten sowie in der Fachliteratur ausführlich beschrieben worden. So ist z.B. die Synthese von Copolymeren der Vinylsulfonsäure mit Acrylamid und Vinylpyrrolidon im J. Polymer Sci., 38, 147 (1959) veröffentlicht worden. Im DE—C 1 101 760 ist ein Verfahren zur Herstellung wasserlöslicher Copolymerisate aus Vinylsulfonsäure und Acrylnitril bzw. Methacrylnitril gegebenenfalls im Gemisch mit weiteren ethylensch ungesättigten Verbindungen beschrieben worden. Copolymerisate aus Vinyl- bzw. Alkenylsulfonaten mit Acrylamid und Vinylamiden sind z.B. in der DE—B—2 444 108 beschrieben worden.

Wasserlösliche Copolymerisate, welche 2-Acrylamido-2-methylpropansulfonsäure, im folgenden mit AMPS abgekürzt, als Comonomeres enthalten, sind in US—A—3 953 342, 3 768 565, DE—A—2 502 012, 2 547 773, US—A—3 907 927, 3 926 718, 3 948 783 beschrieben. So lassen sich z.B. gemäss den Angaben des US—A—3 929 741, Beispiel 10, Copolymere aus Vinylpyrrolidon und AMPS herstellen.

Wenn man unter analogen Bedingungen die Copolymerisation von AMPS mit nicht ringgeschlossenen N-Vinylamiden der allgemeinen Formel

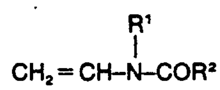

durchführt, so tritt jedoch keine Polymerisation zu wasserlöslichen Produkten ein. Mit den bekannten Methoden war es daher nicht möglich, die erfindungsgemäss einzusetzenden wasserlöslichen Copolymerisate, sie sowohl AMPS bzw. Vinylsulfonsäure als auch nicht ringgeschlossene N-Vinyl-acrylamide einpolymerisiert enthalten, herzustellen.

Die Herstellung der bisher nicht bekannten erfindungsgemäss einzusetzeden wasserlöslichen Copolymerisate gelingt jedoch, wenn man zur Herstellung von je 100 Gewichtsteilen des Copolymerisats entweder 5 bis 60 Gewichtsteile 2-Acrylamido-2-methyl-propansulfonsäure der Formel Ib

$$CH_2{=}CH{—}CO{—}NH{—}C(CH_3)_2{—}CH_2{—}SO_3H \qquad (Ib)$$

oder Vinylsulfonsäure der Formel Ic

$$CH_2{=}CH{—}SO_3H \qquad (Ic)$$

in Wasser löst, durch Zusatz einer Base die Sulfosäure neutralisiert, danach 2 bis 40 Gewichtsteile eines Vinylacrylamids der Formel IIb

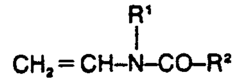

(IIb)

worin $R^1$ Wasserstoff und $R^2$ Wasserstoff, Methyl oder Ethyl bedeuten und 38 bis 93 Gewichtsteile

Acrylamid zufügt, oder wenn man zur Herstellung von je 100 Gewichtsteilen des Copolymerisats 5 bis 60 Gewichtsteile 2-Acrylamido-2-methylpropansulfonsäure der Formel Ib

$$CH_2{=}CH{-}CO{-}NH{-}C(CH_3)_2{-}CH_2SO_3H \qquad \text{(Ib)}$$

in Wasser löst, durch Zusatz einer Base die Sulfosäure neutralisiert, danach 2 bis 40 Gewichtsteile eines Vinylacrylamids der Formel IIb

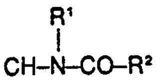

(IIb)

worin $R^1$ und $R^2$ gleich oder verschieden sind und Wasserstoff Methyl, Ethyl oder ggf. zusammen auch Trimethylen bedeuten und 38 bis 93 Gewichtsteile Acrylamid zufügt, die Copolymerisation in an sich bekannter Weise einleitet und bei 0 bis 130°C durchführt und ggf. die Copolymerisate während oder nach der Polymerisationsreaktion noch partiell verseift. Polymerisate, die noch nicht Gegenstand der älteren Patentanmeldung Nr. 80 104 556.8 (EP—A—0 023 712) sind, werden stets dann erhalten, wenn eine partielle Verseifung durchgeführt wird oder wenn mindestens eine der folgenden Bedingungen erfüllt ist:

1) Vinylsulfonsäure bei der Polymerisation eingesetzt wird, d.h. Y eine direkte Bindung ist, oder
2) das Vinylacylamid der Formel IIb in einer Menge von 2 bis 5 Gewichtsteilen eingesetzt wird, oder
3) das Acrylamid in einer Menge von 80—93 Gewichtsteilen eingesetzt wird, und
4) im Vinylacylamid der Formel IIb $R^1$ und $R^2$ zuammen Trimethylen bedeuten.

Bevorzugte erfindungsgemässe Copolymerisate werden erhalten, wenn zur Herstellung von je 100 Gewichtsteilen des Copolymerisats 5—50 Gewichtsteile 2-Acrylamido-2-methyl-propansulfonsäure der Formel Ib oder Vinylsulfonsäure der Formel Ic, 2—20 Gew. Teile des Vinylacylamids der Formel IIb und 45—90 Gew. Teile Acrylamid eingesetzt werden.

Besonders bevorzugt ist der Einsatz von Verbindungen der Formel Ib und IIb mit $R^1{=}R^2{=}CH_3$ zusammen mit Acrylamid.

Die erfindungsgemässen Copolymerisate sind ggf. noch partiell verseift. Als Verseifungsmittel kann prinzipiell jede wasserlösliche Base eingesetzt werden, deren Stärke für eine Reaktion mit den hydrolysierbaren Gruppen ausreicht. Bevorzugt werden jedoch NaOH, KOH, $NH_3$ oder neutrale oder saure Alkali- (insbesondere Natrium- und Kalium-) und Ammoniumsalze der Kohlensäure, Borsäure und Phosphorsäure. Das Verseifungsmittel wird entweder schon der Monomerenlösung zugesetzt oder mit dem Polymerisat vermischt. Die Verseifung erfolgt daher — je nach Verfahrensweise — bereits während der normalerweise exotherm verlaufenden Polymerisation oder durch weitere Wärmezufuhr im Anschluss an die Polymerisation. Auch eine Kombination beider Verfahrensweisen ist möglich.

Die in vielen Fällen vorteilhaften, Borat-Anionen enthaltenden Produkte können auf einfache Weise erhalten werden, indem Natrium- oder Kaliumsalze der Borsäure (Ortho-, Meta- oder Polyborate bzw. Borsäure zusammen mit NaOH oder KOH) als Verseifungsmittel eingesetzt werden.

Bevorzugte erfindungsgemässe und erfindungsgemäss einzusetzende Copolymerisate mit besonders hohem Polymerisationsgrad werden erhalten, wenn man die Polymerisation in wässriger Lösung nach dem Verfahren der sogenannten Gelpolymerisation durchführt. Dabei werden 15—50%ige wässrige Lösungen der Comonomeren mit bekannten geeigneten Katalysatorsystemen und ggf. mit einem der genannten Verseifungsmittel ohne mechanische Durchmischung unter Ausnutzung des Trommsdorff-Norrish-Effektes (Bios Final Rep. 363,22; Makromol. Chem. 1, 169 (1947)) polymerisiert. Aus den hohen Viskositäten wässriger, insbesondere elektrolythaltiger wässriger Lösungen der in dieser Weise hergestellten erfindungsgemässen und erfindungsgemäss einzusetzenden wasserlöslichen Copolymerisate lassen sich unter Zugrundelegung der übilchen Modellvorstellung über den Zusammenhang von Viskosität und mittlerem Molekulargewicht polymerer Substanzen, sowie unter Berücksichtigung von Vergleichswerten ähnlich gebauter Polymerer für die erfindungsgemässen Produkte mittlere Molekulargewichte von $2 \cdot 10^6$ bis $20 \cdot 10^6$ abschätzen. Die Polymerisationsreaktion kann im Temperaturbereich zwischen 0°C und 130°C, vorzugsweise zwischen 10°C und 100°C, sowohl bei Normaldruck als auch unter erhöhtem Druck durchgeführt werden. Wie üblich kann die Polymerisation auch in einer Schutzgasatmosphäre, vorzugsweise unter Stickstoff, ausgeführt werden.

Zur Auslösung der Polymerisation können energiereiche elektromagnetische Strahlen oder die üblichen chemischen Polymerisationsinitiatoren herangezogen werden, z.B. organische Peroxide, wie Benzoylperoxid, tert.Butyl-hydroperoxid, Methyl-ethyl-keton-peroxid, Cumol-hydroperoxid, Azoverbindungen wie Azo-di-iso-butyro-nitril sowie anorganische Peroxiverbindungen wie $(NH_4)_2S_2O_8$ oder $K_2S_2O_8$ oder $H_2O_2$ gegebenenfalls in Kombination mit Reduktionsmitteln wie Natriumhydrogensulfit, und Eisen-II-Sulfat oder Redoxysysteme, welche als reduzierende Komponente eine aliphatische und aromatische Sulfinsäure, wie Benzolsulfinsäure und Toluolsulfinsäure oder Derivate dieser Säuren, enthalten, wie z.B. Mannichaddukte aus Sulfinsäure, Aldehyden und Aminoverbindungen, wie sie in der deutschen Patentschrift 1 301 566 beschrieben sind. Pro 100 g Gesamtmonomeren werden in der Regel 0,03 bis 2 g des Polymerisationsinitiators eingesetzt.

Durch mehrstündiges Nachheizen der Polymerisatgele im Temperaturbereich von 50—130°C, vorzugsweise 70—100°C, können die Qualitätseigenschaften der Polymerisate noch verbesset werden.

Die auf diesem Wege hergestellten, in Form wässriger Gallerten vorliegenden erfindungsgemässen Copolymerisate können nach mechanischer Zerkleinerung mit geeigneten Apparaten direkt in Wasser gelöst werden und zum Einsatz gelangen. Sie können aber auch nach Entfernung des Wassers durch bekannte Trocknungsprozesse in fester Form erhalten und erst bei ihrer Verwendung wieder in Wasser aufgelöst werden.

In dem folgenden Ausführungsbeispielen, die die Herstellung der erfindungsgemäss einzusetzenden wasserlöslichen Copolymeren und insbesondere neuer erfindungsgemässer Copolymeren veranschaulichen und in der anschliessenden Tabelle sind die folgenden Abküzungen verwendet worden:

| | |
|---|---|
| AM: | Acrylamid |
| VIMA: | N-Vinyl-N-methyl-acetamid |
| VIPY: | N-Vinylpyrrolidon |
| AMPS: | 2-Acrylamido-2-methyl-propansulfonsäure |
| VA: | Vinylacetamid |
| VF: | Vinylformamid |
| VSS-Na: | Natriumvinylsulfonat |

Zur Neutralisation der Ansätze wurden folgende Basen verwendet:

| | |
|---|---|
| A: | NaOH |
| B: | K OH |
| C: | $NH_3$ |
| D: | Dimethyl-β-hydroxyethylamin |

In der Spalte «Katalysatoren» bedeuten:

| | |
|---|---|
| APS: | Ammoniumperoxidisulfat |
| DBA: | Dibutylammoniumchlorid |

Biespiel 1

In einem Polymerisationskolben von 2 l Inhalt, ausgestattet mit Planschliffdeckel, Rührer, Thermometer und Gaseinleitungsrohr werden in 560 ml entionisiertem Wasser 30 g AMPS gelöst und mit KOH neutralisiert. Dann werden 160 g AM, 42,8 g $K_2CO_3$ und 10 g N-Vinyl-N-methyl-acetamid zugesetzt und unter Rühren und Einleiten von Stickstoff bei 20—21°C innerhalb von 15 Minuten gelöst. Nun gibt man 4 g einer 10%igen Dibutylammoniumchlorid-lösung zu, leitet unter Rühren weitere 15 Minuten Stickstoff ein, setzt 120 mg APS — gelöst in 8 g Wasser — zu und lässt unter Stickstoff-Einleitung noch 3 Minuten bei erhöhter Drehzahl rühren. Die $N_2$-Einleitung wird beendet, Einleitungsrohr und Rührer werden hochgezogen. Nach einer Induktionszeit von ca. 45 Minuten setzt die Polymerisation ein, wobei die Innentemperatur bis 67°C ansteigt und die Lösung in ein formstabiles Gel übergeht. Das Polymerisat wird anschliessend noch 12 Stunden auf 80°C geheizt. die in einem Brookfield-Viskosimeter bei einem Schergefälle von $D = 7{,}3\ s^{-1}$ gemessenen Viskositäten betragen bei 20°C:

$\eta_A = 42{,}5$ mPa·s in 0,05%iger wässriger Lösung von 3,5°d,

$\eta_B = 18{,}7$ mPa·s in 02%iger wässriger Lösung mit einem Salzgehalt von 130 g NaCl und 10 g $CaCl_2$ pro Liter.

Die aus der Literatur bekannten bzw. im Handel befindlichen Homo- und Copolymerisate zeigen unter gleichen Bedingungen gemessene Viskositäten $\eta_A$, die 30 bis 80%, Viskositäten $\eta_B$, die ca. 60% unter diesen Werten liegen.

Beispiel 2

In einem Polymerisationskolben von 2 l Inhalt, ausgestattet mit Planschliffeckel, Rührer, Thermometer und Gaseinleitungsrohr werden zu einer Lösung von 23 g NaOH in 560 g entionisiertem Wasser unter Kühlung sowie Rühren und Einleiten von Stickstoff portionsweise 120 g AMPS, danach 76 g AM und 4 g VIMA gegeben. Man lässt etwa 15 Minuten rühren, gibt dann 4 g einer 10%igen DBA-Lösung zu, leitet unter Rühren weitere 15 Minuten Stickstoff ein, setzt dann 120 mg APS — gelöst in 8 g Wasser — zu und lässt unter Stickstoff-Einleitung noch 3 Minuten bei erhöhter Drehzahl nachrühren. Die $N_2$-Einleitung wird beendet, Einleitungsrohr und Rührer werden hochgezogen. Nach einer Induktionszeit von ca. 30 Minuten setzt die Polymerisation ein, wobei die Innen temperatur bis 56°C ansteigt und die Lösung in ein formstabiles Gel übergeht. Es werden bei 20°C folgenden Viskositäten gemessen:

$\eta_A = 38{,}2$ mPa·s
$\eta_B = 17{,}2$ mPa·s

Gemäss diesen Herstellungsbeispielen können auch die Copolymerisate der Tabelle hergestellt werden.

| Nr. | Monomerenzusammensetzung (%) AM | VIMA | AMPS | VSS-Na | VIPY | Weitere Zusätze (auf Ges.-Mon.) | Base | Katalys. | η A [mPas] | η B [mPas] |
|---|---|---|---|---|---|---|---|---|---|---|
| 3 | 70 | 10 | 20 | | | 6,1% $H_3BO_3$ | A | APS/DBA | 13,9 | 5,8 |
| 4 | 93 | | 5 | | 2 | 24,8% $K_2CO_3$ | B | APS/DBA | 56,4 | 16,1 |
| 5 | 85 | 5 | 10 | | | 22,7% $K_2CO_3$ | B | APS/DBA | 55,6 | 15,2 |
| 6 | 90 | 5 | 5 | | | 18,0% $Na_2CO_3$ | A | APS/DBA | 45,5 | 14,4 |
| 7 | 83 | 7 | 10 | | | 16,6%$Na_2CO_3$ | A | APS/DBA | 38,5 | 14,9 |
| 8 | 83 | 7 | 10 | | | 19,8% $H_3BO_3$ | A | APS | 50,7 | 12,7 |
| 9 | 85 | | 10 | | 5 | 22,7% $K_2CO_3$ | B | APS/DBA | 34,4 | 13,0 |
| 10 | 80 | 5 | 15 | | | 19% $H_3BO_3$ | A | APS | 51,5 | 11,9 |
| 11 | 65 | 5[1] | 30 | | | 2,8% $H_3BO_3$ | B | APS | 25,7 | 9,2 |
| 12 | 60 | 5 | 35 | | | 5,2% $H_3BO_3$ | A | APS | 28,8 | 8,0 |
| 13 | 80 | 5[2] | 15 | | | 19,1% $Na_2CO_3$ | A | APS/DBA | 45,0 | 12,6 |
| 14 | 85 | 5[2] | 10 | | | 20,3% $H_3BO_3$ | A | APS | 31,5 | 10,0 |
| 15 | 38 | 2 | 60 | | | | A | APS | 20,0 | 7,7 |
| 16 | 78 | 7 | 15 | | | 20,8% $Na_2CO_3$ | A | APS | 33,9 | 11,1 |
| 17 | 83 | 2 | 15 | | | 22,2% $Na_2CO_3$ | A | APS | 31,0 | 9,9 |
| 18 | 65 | | 30 | | 5 | 8,5% $H_3BO_3$ | A | APS | 40,5 | 11,6 |

[1] VF [2] VA

| Nr. | Monomerenzusammensetzung (%) AM | VIMA | AMPS | VSS-Na | VIPY | Weitere Zusätze (auf Ges.-Mon.) | Base | Katalys. | η A [mPas] | η B [mPas] |
|---|---|---|---|---|---|---|---|---|---|---|
| 19 | 90 | 5[1] | 5 | | | 27,5% $H_3BO_3$ | A | APS/DBA | 51,9 | 13,4 |
| 20 | 72 | 8 | 20 | | | 12,6% $H_3BO_3$ | A | APS | 37,8 | 10,2 |
| 21 | 40 | 10 | 50 | | | | A | APS/DBA | 14,8 | 3,3 |
| 22 | 60 | 5 | 35 | | | 2,6% $H_3BO_3$ | A | APS | 16,4 | 6,4 |
| 23 | 55 | 5 | 40 | | | | A | APS/DBA | 17,8 | 5,0 |
| 24 | 50 | 10 | 40 | | | | A | APS/DBA | 18,3 | 6,9 |
| 25 | 45 | 15 | 40 | | | | A | APS/DBA | 18,8 | 2,4 |
| 26 | 60 | 10 | 30 | | | 5,2% $H_3BO_3$ | A | APS | 13,4 | 4,6 |
| 27 | 75 | | 20 | | 5 | 3,3% $H_3BO_3$ | A | APS | 25,0 | 10,0 |
| 28 | 65 | 5 | 30 | | | | C | APS/DBA | 18,3 | 9,3 |
| 29 | 75 | | 18 | | 7 | 6,5% $H_3BO_3$ | A | APS | 31,2 | 11,1 |
| 30 | 75 | 7[2] | 18 | | | 9,8% $H_3BO_3$ | A | APS | 22,2 | 11,0 |
| 31 | 70 | 10 | 20 | | | 6,1% $H_3BO_3$ | B | APS | 13,6 | 7,3 |
| 32 | 80 | 10 | 10 | | | 14% $H_3BO_3$ | A | APS | 20,2 | 7,4 |
| 33 | 68 | 2 | 30 | | | 5,9% $H_3BO_3$ | A | APS | 26,0 | 10,9 |
| 34 | 70 | 10 | 20 | | | 16,3% $H_3BO_3$ | A | APS | 15,1 | 5,2 |
| 35 | 70 | 5 | 25 | | | 15,3% $H_3BO_3$ | B | APS | 20,2 | 12,2 |
| 36 | 83 | 2 | 15 | | | 19,9% $H_3BO_3$ | A | APS | 37,6 | 11,9 |
| 37 | 78 | 2 | 20 | | | 18,6% $H_3BO_3$ | A | APS | 29,5 | 11,0 |
| 38 | 73 | 2 | 25 | | | 6,4% $H_3BO_3$ | A | APS | 31,3 | 12,0 |
| 39 | 70 | | 25 | | 5 | 12,2% $H_3BO_3$ | B | APS | 44,8 | 15,0 |
| 40 | 40 | 5 | 55 | | | | A | APS/DBA | 20,5 | 6,0 |
| 41 | 50 | 5 | 45 | | | | B | APS/DBA | 20,6 | 11,2 |
| 42 | 68 | 2 | 30 | | | | C | APS/DBA | 13,4 | 8,9 |
| 43 | 73 | 2 | 25 | | | | D | APS/DBA | 10,7 | 7,6 |
| 44 | 70 | 10 | 20 | | | 22,2% $NaHCO_3$ | A | APS | 10,2 | 4,8 |
| 45 | 93 | 2 | 5 | | | 22,4% $H_3BO_3$ | A | APS | 81,0 | 11,5 |
| 46 | 85 | 5 | 10 | | | 17% $Na_2CO_3$ | A | APS | 46,2 | 10,3 |
| 47 | 88 | 2 | 10 | | | 21,1% $H_3BO_3$ | A | APS | 52,5 | 11,0 |
| 48 | 85 | 5[1] | 10 | | | 11,1% $H_3BO_3$ | B | APS | 50,4 | 9,8 |
| 49 | 80 | 3 | 17 | | | 3,5% $H_3BO_3$ | A | APS | 36,3 | 12,0 |
| 50 | 70 | 5[2] | 25 | | | | A | APS/DBA | 71,0 | 25,0 |
| 51 | 57 | 3 | 40 | | | | B | APS/DBA | 22,3 | 10,0 |
| 52 | 75 | 5 | 20 | | | 17,9% $H_3BO_3$ | A | APS | 25,3 | 8,5 |
| 53 | 80 | | 15 | | 5 | 7% $H_3BO_3$ | A | APS | 42,4 | 9,5 |
| 54 | 70 | | 15 | | 15 | 16,7% $H_3BO_3$ | A | APS | 31,7 | 8,8 |
| 55 | 80 | | 15 | | 5 | 15% $H_3BO_3$ | A | APS | 26,0 | 10,4 |
| 56 | 70 | 5 | 25 | | | | D | APS | 3,0 | 3,0 |
| 57 | 75 | 5[2] | 20 | | | | B | APS | 15,3 | 13,2 |
| 58 | 70 | 5 | 25 | | | | C | APS | 8,5 | 6,9 |
| 59 | 80 | 2 | 15 | | 3 | 21,4% $K_2CO_3$ | B | APS/DBA | 39,1 | 17,3 |
| 60 | 38 | 2 | 55 | 5 | | | A | APS/DBA | 37,0 | 15,2 |
| 61 | 80 | 3 | 10 | 5 | 2 | 18,0% $Na_2CO_3$ | A | APS | 41,3 | 14,7 |
| 62 | 70 | 5 | 20 | 5 | | 3,3% $H_3BO_3$ | B | APS | 62,2 | 15,3 |

[1] VF
[2] VA

Anwendungstest: Scherstabilität

Bei der Ausprüfung auf Eignung der erfindungsgemässen Copolymerisate für den Einsatz bei der Erdöltertiärförderung ist die Scherstabilität neben einer rückstandsfreien Löslichkeit ein Wichtiges Vorauswahlkriterium.

Zur Prüfung der Scherstabilität werden zunächst 500 ppm Copolymerisat (Einsatzmenge auf Wirkstoffgehalt bezogen) in Süsswasser von 3,5° deutscher Härte, entsprechend 35 mg CaO-Liter, gelöst. Anschliessend erfolgt bei Raumptemperatur eine erste Viskositätsmessung (A). Die Lösung wird danach eine bestimmte Zeit lang einer Scherung mit einem schnellaufenden Rührer unterworfen und eine erneute Viskositätsmessung ($A_1$) vorgenommen. Der Quotient beider Viskositätswerte

$$\text{Faktor}_{\text{(Scherung)}} = A_{1/A}$$

ist ein Mass für die Scherbelastbarkeit des Flutmediums bei den angegebenen Versuchsbedingungen. Für eine Auswahl der Copolymerisate sind die ermittelten Faktoren in der folgenden Tabelle zusammengestellt:

| Copolymerisat | Faktor (Scherung) |
|---|---|
| Tabelle Nr. 35 | 0,68 |
| Tabelle Nr. 39 | 0,64 |
| Tabelle Nr. 41 | 0,73 |
| Tabelle Nr. 51 | 0,72 |

Die Werte für die übrigen erfindungsgemässen Copolymerisate liegen in der geichen Grössenordnung. Handelsübliche Copolymerisate aus Acryamid und Acrylsäure ergeben unter gleichen Versuchsbedingungen Werte für den Faktor (Scherung) von 0,55 bis 0,40 und niedriger. Die Viskositätsmessung erfolgt in einem Brookfield-Viskosimeter.

Anwendungstest: Injektivität

Für das Einpressen des Flutmediums durch die Injektionssonde in die Lagerstätte und für einen einwandfreien Flutvorgang innerhalb der Formation ist ein fest stofffreie, quellkörperfreie Lösung erforderlich.

Zur Bestimmung der Injektivität von Lösungen der erfindungsgemässen Copolymerisate werden sandgepackte Glasrohre bei Raumtemperatur mit einem bestimmten konstanten Volumenstrom für einen Zeitraum von 24 h geflutet; dabei wird der Druck des Flutmediums vor dem Eintritt in das Flutrohr nach Ablauf von 1 h ($P_1$) und von 24 h ($P_2$) ermittelt Der Quotient

$$\text{Faktor}_{\text{(Injektivität)}} = P_{2/P_1}$$

ist ein Mass für Injizierbarkeit des Flutmediums bei den vorgegebenen Bedingungen. Für diese Teste werden Lösungen von 1000 ppm Copolymerisat in Salzwasser, bestehend aus 130 g NaCl und 10 g $CaCl_2$ pro Liter, verwendet. Für eine Auswahl der Copolymerisate sind die ermittelten Faktoren in der folgenden Tabelle aufgeführt.

| Copolymerisat | Faktor (Injektivität |
|---|---|
| Beispiel Nr. 1 | 1,12 |
| Beispiel Nr. 2 | 1,10 |
| Tabelle Nr. 35 | 1,07 |
| Tabelle Nr. 39 | 1,09 |
| Tabelle Nr. 41 | 1,05 |
| Tabelle Nr. 51 | 1,04 |

Lösungen mit hohem Gelkörperanteil, die mit handelsüblichen Polymerisieraten aus Acrylamid/Acrylat bisweilen auftreten, zeigen Werte von 1,9 und mehr und führen schliesslich zur Verstopfung der Sandpackung.

Anwendungstest: Viskosität

Entscheidendes Kriterium für die Wirtschaftlichkeit eines Flutmittelzusatzes für Polymerflutverfahren ist seine Viskositätsergiebigkeit im vorgegebenen, oftmals salinen Lagerstätten- und Flutwassermedium bei der jeweiligen Lagerstättentemperatur. Bei einem Einsatz von acrylamidhaltigen Polymerisaten ist deren Viskositätsverhalten von der Gegenwart von zweiwertigen Kationen, wie Calcium- und Magnesiumionen, mitbestimmt.

Folgende Viskositätswerte werden im Brookfield-Viskosimeter bei einem Schergefälle von $D = 7{,}3\ s^{-1}$ bei 85°C für wässrige, 2000 ppm Copolymerisat enthaltende Salzlösungen (130 g NaCl und 10 g $CaCl_2$ pro Liter) ermittelt:

| Copolymerisat | Viskosität (mPa.st) |
|---|---|
| Beispiel Nr. 1 | 6,3 |
| Beispiel Nr. 2 | 7,7 |
| Tabelle Nr. 35 | 5,4 |
| Tabelle Nr. 39 | 6,0 |
| Tabelle Nr. 41 | 5,3 |
| Tabelle Nr. 51 | 4,9 |

Handelsübliche Copolymerisate zeigen unter gleichen Bedingungen wesentlich niedrigere Werte.

Anwendungstest: Thermostabilität

Ein weiteres wichtiges Kriterium für die Beurteilung von Polymerisaten für die Tertiärförderung ist die Langzeitbeständigkeit der Lösungen unter thermischer Belastung. Die Flutmedien sollten dabei weder wesentlich in ihrer Viskosität abnehmen, noch zu Ausflockungen neigen. 2000 ppm Copolymerisat, 130 g NaCl und 10 g $CaCl_2$ enthaltende wässrige Lösungen werden zur Prüfung der Thermostabilität bei erhöhter Temperatur gelagert. In regelmässigen Zeitabständen werden Proben entnommen, auf Raumtemperatur abgekühlt und anschliessend wird die Viskosität gemessen. Die gemessenen Viskositätswerte werden prozentual auf die Werte, die vor Beginn der Lagerung erhalten wurden, bezogen. 100% bedeuten demnach eine vollständige Erhaltung der Viskosität.

Die erfindungsgemässen Copolymerisate zeigen in Form ihrer wässrigen salinen Lösungen gute bis sehr gute Stabilitäten, wie aus der nachfolgenden Tabelle hervorgeht.

| Copolymerisat | Viskositätserhaltung nach 10 Tagen | nach 30 Tagen Lagerung |
|---|---|---|
| Beispiel Nr. 1 | 97% | 95% |
| Beispiel Nr. 2 | 100% | 99% |
| Tabelle Nr. 35 | 100% | 96% |
| Tabelle Nr. 39 | 96% | 90% |
| Tabelle Nr. 41 | 100% | 99% |
| Tabelle Nr. 51 | 100% | 100% |

Die Lösungen bleiben klar und durchsichtig mit Ausnahme von Lösung mit Copolymerisat Nr. 39, die ein schwache Trübung aufweist. Handelsübliche Copolymerisate zeigen bei gleichen Versuchsbedingungen wesentlich stärkere Abnahmen in den Viskositätswerten und neigen zu Ausfällungen wasserunlöslicher Niederschläge.

Anwendungstest: Mobilitätsverhalten

Die eintretende Mehrentölung beim Fluten von ölhaltigen porösen Gesteins- oder Sandschichten unter Einsatz von wasserlöslichen Polymeren wird durch Laborflutversuche nachgeweisen. Die bei diesen Anwendungstesten durchgeführten Flutungen erfolgen in sandgepackten Flutrohren, die mit entgastem Lagerstättenöl, sog. Totöl, gefüllt sind. Die Apparatur für Flutversuche besteht im wesentlichen aus Vorratsbehältern für verschiedene Flutmedian, einem automatischen Druckschreiber, einer Förderpumpe für die Förderung des Flutmediums, Flutrohr sowie einem automatischen Fraktionssammer zum Auffangen der Eluate.

Bei dem Flutrohr handelt es sich um ein Glasrohr bestimmter Dimension, das mit Sand definierter Korngrössenverteilung beschickt ist und mit dem Totöl gesättigt wird.

Mit der Förderpumpe werden aus den Vorratsbehältern bei konstantem Volumenstrom die ausgewählten Flutmedien in die temperierte, ölsättigte Sandpackung transportiert. In einem jeweils parallellaufenden Blindversuch wird ausschliesslich mit synthetischem Formationswasser geflutet. In dem nachgeschalteten Fraktionssammler werden die Eluate nach dem Durchfliessen der Sandpackung getrennt aufgefangen und volumetrisch bestimmt. Der Vergleich der erhaltenen Ölmengen im Fraktionssammler aus den Flutversuchen mit verschiedenen erfindungsgemässen Copolymerisaten als Flutmittelzusatz mit denjenigen ohne Polymerzusatz belegt die eintretende erwünschte Mehrentölung bei Einsatz der erfindungsgemässen Verbindungen.

Ohne Einsatz von wasserlöslichen polymeren Zusatzmitteln lag die Entölung der Sandpackung bei durchschnittlich 55 bis 60%; beim Einsatz von 2000 ppm Copolymerisat in Salzwasser, 130 g NaCl und 10 g $CaCl_2$ pro Liter enthaltend; bei 85°C liegen die Werte für die Gesamtentölung bei ca. 89 bis 93% (für Copolymerisate Tabelle Nr. 41 und 51) bzw. bei 93 bis 96% (für Copolymerisate Beispiel Nr. 1, 2 und Tabelle Nr. 39). Die Wirksamkeit und Eingung der erfindungsgemässen Copolymerisate für den Einsatz beim Erdöltertiärfluten sind damit gegeben.

## Patentansprüche

1. Wasserlösliche Copolymerisate, die in statistischer Verteilung zu 5 bis 60 Gew.% aus Resten der Formel I

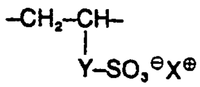

(I)

2 bis 40 Gew.% aus Resten der Formel II

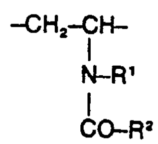

(II)

und 38 bis 93 Gew.% aus Resten der Formel III

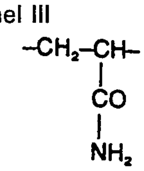

(III)

bestehen, sowie deren durch Partialhydrolyse erhältliche Derivate, wobei entweder $R^1$ Wasserstoff und $R^2$ Wasserstoff, Methyl, Ethyl, Y den Rest $—CO—NH—C(CH_3)_2—CH_2—$ oder eine direkt Bindung und $X^{\oplus}$ ein Kation bedeuten, oder wobei $R^1$ und $R^2$ gleich oder verschieden sind und Wasserstoff, Methyl, Ethyl oder ggf. zusammen auch Trimethylen, Y den Rest $—CO—NH—C(CH_3)_2—CH_2—$ und $X^{\oplus}$ ein Kation bedeuten, mit Ausnahme der wasserlöslichen Copolymerisate, die in statistischer Verteilung zu

5 bis 60 Gew.% aus Resten der Formel Ia

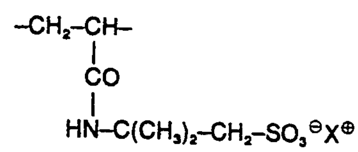

(Ia)

5 bis 40 Gew.% aus Resten der Formel IIa

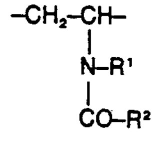

(IIa)

38 bis 80 Gew.% aus Resten der Formel IIIa

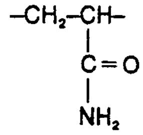 (IIIa)

bestehen, wobei $R^1$ und $R^2$ gleich oder verschieden sind und Wasserstoff, Methyl oder Ethyl bedeuten und $X^{\oplus}$ ein Kation ist.

2. Wasserlösliche Copolymerisate gemäss Anspruch 1, dadurch gekennzeichnet, dass sie in statistischer Verteilung zu 5 bis 50 Gew.% aus Resten der Formel 1, 2 bis 20 Gew.% aus Resten der Formel II und zu 45 bis 90 Gew.% aus Resten der Formel III bzw. deren Hydrolyseprodukten bestehen.

3. Wasserlösliche Copolymerisate gemäss den Ansprüchen 1 und 2, dadurch gekennzeichnet, dass durch Partialhydrolyse ein Anteil von bis zu 60% der ursprünglich vorhandenen Reste der Formel III durch Reste der Formel IV

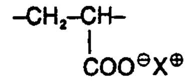 (IV)

ersetzt ist.

4. Wasserlösliche Copolymerisate gemäss Anspruch 3, dadurch gekennzeichnet, dass sie insgesamt 20 bis 60 Gew.% von Gruppen der Formeln I und IV enthalten.

5. Wasserlösliche Copolymerisate gemäss den Ansprüchen 1 bis 4, dadurch gekennzeichnet, dass sie zusätzlich Borat-Anionen in einer Menge von 2,5 bis 35 Gew.%, berechnet als $H_3BO_3$ und bezogen auf das Gewicht des Copolymerisats, enthalten.

6. Wasserlösliche Copolymerisate gemäss den Ansprüchen 1 bis 5, dadurch gekennzeichnet, dass sie unter Ausnützung des Trommsdorff-Norrish-Effekts hergestellt worden sind.

7. Verfahren zur Herstellung wasserlöslicher Copolymerisate, die in statistischer Verteilung zu 5 bis 60 Gew.% aus Resten der Formel I

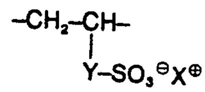 (I)

2 bis 40 Gew.% aus Resten der Formel II

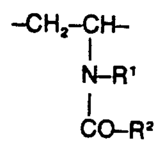 (II)

und 38 bis 93 Gew.% aus Resten der Formel III

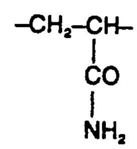 (III)

bestehen, sowie deren durch Partialhydrolyse erhältliche Derivate, wobei entweder $R^1$ Wasserstoff und $R^2$ Wasserstoff, Methyl, Ethyl, Y den Rest $—CO—NH—C(CH_3)_2—CH_2$ oder eine direkte Bindung und $X^{\oplus}$ ein Kation bedeuten, oder wobei $R^1$ und $R^2$ gleich oder verschieden sind und Wasserstoff, Methyl, Ethyl oder ggf. zusammen auch Trimethylen, Y den Rest $—CO—NH—C(CH_3)_2—CH_2—$ und $X^{\oplus}$ ein Kation bedeuten, mit Ausnahme der wasserlöslichen Copolymerisate, die in statischer Verteilung zu
5 bis 60 Gew.% aus Resten der Formel Ia

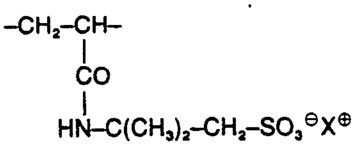 (Ia)

5 bis 40 Gew.% aus Resten der Formel IIa

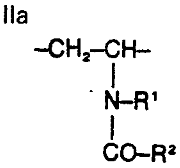 (IIa)

38 bis 80 Gew.% aus Resten der Formel IIIa

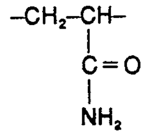

(IIIa)

bestehen, wobei $R^1$ und $R^2$ gleich oder verschieden sind und Wasserstoff, Methyl oder Ethyl bedeuten und $X^{\oplus}$ ein Kation ist, dadurch gekennzeichnet, dass man zur Herstellung von je 100 Gewichtsteilen des Copolymerisats entweder 5 bis 60 Gewichtsteile 2-Acrylamido-2-methyl-propansulfonsäure der Formel Ib

$$CH_2 = CH—CO—NH—C(CH_3)_2—CH_2—SO_3H \qquad (Ib)$$

oder Vinylsulfonsäure der Formel Ic

$$CH_2 = CH—SO_3H \qquad (Ic)$$

in Wasser löst, durch Zusatz einer Base die Sulfosäure neutralisiert, danach 2 bis 40 Gewichtsteile eines Vinylacylamides der Formel IIb

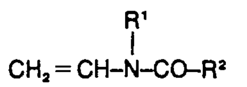

(IIb)

worin $R^1$ Wasserstoff und $R^2$ Wasserstoff, Methyl oder Ethyl bedeuten und 38 und 93 Gewichtsteile Acrylamid zufügt oder dass man zur Herstellung von je 100 Gewichtsteilen des Copolymerisats 5 bis 60 Gewichtsteile 2-Acrylamido-2-methylpropansulfonsäure der Formel Ib

$$CH_2 = CH—CO—NH—C(CH_3)_2—CH_2—SO_3H \qquad (Ib)$$

in Wasser löst, durch Zusatz einer Base die Sulfosäure neutralisiert, danach 2 bis 40 Gewichtsteile eines Vinylacylamides der Formel IIb

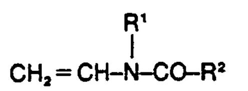

(IIb)

worin $R^1$ und $R^2$ gleich oder verschieden sind und Wasserstoff, Methyl, Ethyl oder ggf. zusammen auch Trimethylen bedeuten und 38 bis 93 Gewichtsteile Acrylamid zufügt, die Copolymerisation in an sich bekannter Weise einleitet und bei 0 bis 130°C durchführt und die Copolymerisate während oder nach der Polymerisationsreaktion noch partiell verseift, oder, sofern keine partielle Verseifung vorgenommen wird, mindestens eine der folgenden Bedingungen erfüllt ist:

1) Vinylsulfonsäure eingesetzt wird oder
2) das Vinylacylamid der Formel IIb in einer Menge von 2 his 5 Gewichtsteilen eingesetzt wird, oder
3) das Acrylamid in einer Menge von 80—93 Gewichtsteilen eingesetzt wird oder
4) im Vinylacylamid der Formel IIb $R^1$ und $R^2$ zusammen Trimethylen bedeuten.

8. Verfahren gemäss Anspruch 7, dadurch gekennzeichnet, dass die Polymerisation unter Ausnützung des Trommsdorf-Norrish-Effekts durchgeführt wird.

9. Mittel zur Entölung von mineralölhaltigen Sand- oder Gesteinsmassen, bestehend aus einer Lösung von 20 bis 5000 ppm eines wasserlöslichen Copolymerisats gemäß Anspruch 1.

10. Verwendung der wäßrigen Lösung eines wasserlöslichen Copolymerisats gemäß Anspruch 1 zum Entölen von mineralölhaltigen Sand- oder Gesteinsmassen.

## Claims

1. Water-soluble copolymers which consist in random distribution, of radicals of the formula I

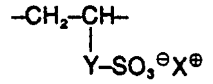

(I)

to the extent of 5 to 60% by weight, of radicals of the formula II

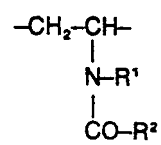

(II)

to the extent of 2 to 40% by weight, and of radicals of the formula III

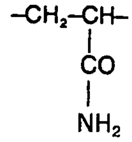

(III)

to the extent of 38 to 93% by weight, and derivatives thereof which can be obtained by partial hydrolysis, wherein either $R^1$ denotes hydrogen, $R^2$ denotes hydrogen, methyl or ethyl, Y denotes the radical $-CO-NH-C(CH_3)_2-CH_2-$ or a direct bond with $X^{\oplus}$ denotes a cation or $R^1$ and $R^2$ are identical or different and denote hydrogen, methyl or ethyl or, where appropriate, together denote trimethylene, Y denotes the radical $-CO-NH-C(CH_3)_2-CH_2-$ and $X^{\oplus}$ denotes a cation, with the exception of the water-soluble copolymers which consist, in random distribution, of radicals of the formula Ia

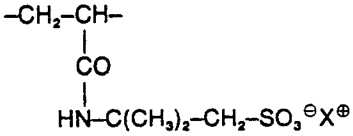

(Ia)

to the extent of 5 to 60% by weight, of radicals of the formula IIa

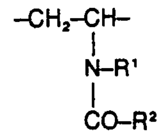

(IIa)

to the extent of 5 to 40% by weight, and of radicals of the formula IIIa

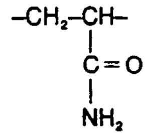

(IIIa)

to the extent of 38 to 80% by weight, wherein $R^1$ and $R^2$ are identical or different and denote hydrogen, methyl or ethyl and $X^{\oplus}$ is a cation.

2. Water-soluble copolymers to Claim 1, characterised in that they consist, in random distribution, of radicals of the formula I to the extent of 5 to 50% by weight, of radicals of the formula II to the extent of 2 to 20% by weight and of radicals of the formula III to the extent of 45 to 90% by weight, or hydrolysis products thereof.

3. Water-soluble copolymers according to Claims 1 and 2, characterised in that a proportion of up to 60% of the radicals of the formula III originally present is replaced by radicals of the formula IV

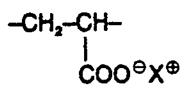

(IV)

by partial hydrolysis.

4. Water-soluble copolymers according to Claim 3 characterised in that they contain a total of 20 to 60% by weight of groups of the formulae I and IV.

5. Water-soluble copolymers according to Claims 1 to 4, characterised in that they additionally contain borate anions in an amount of 2.5 to 35% by weight, calculated as $H_3BO_3$ and relative to the weight of the copolymer.

6. Water-soluble copolymers according to Claims 1 to 5, characterised in that they have been prepared utilising the Trommsdorff-Norrish effect.

7. Process for the preparation of water-soluble copolymers which consist, in random distribution, of radicals of the formula I

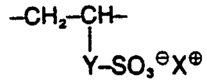

(I)

to the extent of 5 to 60% by weight, of radicals of the formula II

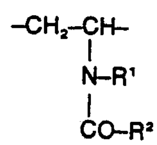

(II)

to the extent of 2 to 40% by weight, and of radicals of the formula III

$$\begin{array}{c} -CH_2-CH- \\ | \\ CO \\ | \\ NH_2 \end{array} \qquad (III)$$

to the extent of 38 to 93% by weight, and derivatives thereof which can be obtained by partial hydrolysis, wherein either $R^1$ denotes hydrogen, $R^2$ denotes hydrogen, methyl or ethyl, Y denotes the radical $-CO-NH-C(CH_3)_2-CH_2-$ or a direct bond and $X^{\oplus}$ denotes a cation, or $R^1$ and $R^2$ are identical or different and denote hydrogen, methyl or ethyl or, where appropriate, together denote trimethylene, Y denotes the radical $-CO-NH-C(CH_3)_2-CH_2-$ and $X^{\oplus}$ denotes a cation, with the exception of the water-soluble copolymers which consist, in random distribution, of radicals of the formula Ia

$$\begin{array}{l} -CH_2-CH- \\ \quad\quad\; | \\ \quad\quad\; CO \\ \quad\quad\; | \\ \quad\quad\; HN-C(CH_3)_2-CH_2-SO_3^{\ominus}X^{\oplus} \end{array} \qquad (Ia)$$

to the extent of 5 to 60% by weight, of radicals of the formula IIa

$$\begin{array}{c} -CH_2-CH- \\ | \\ N-R^1 \\ | \\ CO-R^2 \end{array} \qquad (IIa)$$

to the extent of 5 to 40% by weight, and of radicals of the formula IIIa

$$\begin{array}{c} -CH_2-CH- \\ | \\ C=O \\ | \\ NH_2 \end{array} \qquad (IIIa)$$

to the extent of 38 to 80% by weight, wherein $R^1$ and $R^2$ are identical or different and denote hydrogen, methyl or ethyl and $X^{\oplus}$ is a cation, characterised in that, for the preparation of each 100 parts by weight of the copolymers, either 5 to 60 parts by weight of 2-acrylamido-2-methyl-propanesulphonic acid of the formula Ib

$$CH_2 = CH-CO-NH-C(CH_3)_2-CH_2-SO_3H \qquad (Ib)$$

or vinylsulphonic acid of the formula Ic

$$CH_2 = CH-SO_3H \qquad (Ic)$$

are dissolved in water, the sulphonic acid is neutralised by adding a base and 2 to 40 parts by weight of a vinylacylamide of the formula IIb

$$\begin{array}{l} \quad\quad\quad\quad\;\; R^1 \\ \quad\quad\quad\quad\;\; | \\ CH_2=CH-N-CO-R^2 \end{array} \qquad (IIb)$$

in which $R^1$ denotes hydrogen and $R^2$ denotes hydrogen, methyl or ethyl, and 38 to 93 parts by weight of acrylamide are then added, or in that, for the preparation of each 100 parts by weight of the copolymer, 5 to 60 parts of 2-acryl-amido-2-methyl-propanesulphonic acid of the formula Ib

$$CH_2 = CH-CO-NH-C(CH_3)_2-CH_2-SO_3H \qquad (Ib)$$

are dissolved in water, the sulphonic acid is neutralised by adding a base, 2 to 40 parts by weight of a vinylacylamide of the formula IIb

$$\begin{array}{l} \quad\quad\quad\quad\;\; R^1 \\ \quad\quad\quad\quad\;\; | \\ CH_2=CH-N-CO-R^2 \end{array} \qquad (IIb)$$

wherein $R^1$ and $R^2$ are identical or different and denote hydrogen, methyl or ethyl or, where appropriate, together denote trimethylene, and 38 to 93 parts by weight of acrylamide are then added, the copolymerisation is initiated in a manner which is in itself known and is carried out at 0 to 130°C, and the copolymers are also partially hydrolsed during or after the polymerisation reaction, or, if no partial

hydrolysis is carried out, at least one of the following conditions is fulfilled: 1) vinylsulphonic acid is employed, or 2) the vinylacylamide of the formula IIb is employed in an amount of 2 to 5 parts by weight, or 3) the acrylamide is employed in an amount of 80—93 parts by weight, or 4) $R^1$ and $R^2$ in the vinylacylamide of the formula IIb together denote trimethylene.

8. Process according to Claim 7, characterised in that the polymerisation is carried out utilising the Trommsdorff-Norrish effect.

9. Agent for deoiling sand or rock masses containing mineral oil, which consists of a solution of 20 to 5,000 ppm of a water-soluble copolymer according to Claim 1.

10. Use of the aqueous solution of a water-soluble copolymer according to Claim 1 for deoiling sand or rock masses containing mineral oil.

**Revendications**

1. Copolymères solubles dans l'eau qui comportent en répartition statistique (aléatoire) 5 à 60% en poids de radicaux de formule (I):

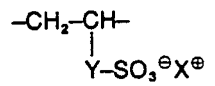
(I)

2 à 40% en poids de radicaux de formule (II):

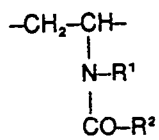
(II)

et 38 à 93% en poids de radicaux de formule (III):

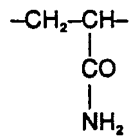
(III)

ainsi que leurs dérivés résultant d'une hydrolyse partielle, formules dans lesquelles ou bien $R^1$ représente l'hydrogène et $R^2$ l'hydrogène ou le groupe méthyle ou éthyle, Y le radical $—CO—NH—C(CH_3)_2—CH_2—$ ou une liaison directe et $X^{\oplus}$ un cation, ou bien $R^1$ et $R^2$, qui peuvent être identiques ou différents l'un de l'autre, sont chacun l'hydrogène, un group méthyle ou éthyle ou éventuellement forment ensemble un groupe triméthylène, Y est le radical $—CO—NH—C(CH_3)_2—CH_2—$ et $X^{\oplus}$ un cation, à l'exception des copolymères hydrosolubles qui sont formés, en répartition statistique, de 5 à 60% en poids de radicaux de formule (Ia):

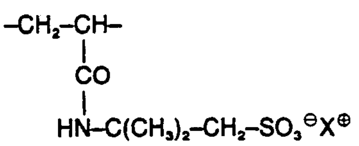
(Ia)

5 à 40% en poids de radicaux de formule (IIa):

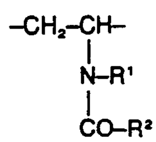
(IIa)

et 38 à 80% en poids de radicaux de formule (IIIa):

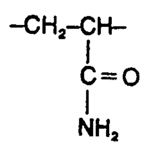
(IIIa)

formules dans lesquelles $R^1$ et $R^2$, identiques ou différents l'un de l'autre, représentent chacun l'hydrogène ou le groupe méthyle ou éthyle et $X^{\oplus}$ un cation.

2. Copolymères hydrosolubles selon la revendication 1, caractérisés en ce qu'ils comportent en répartition statistique de 5 à 50% en poids des radicaux de formule (I), 2 à 20% en poids des radicaux de formule (II) et 45 à 90% en poids des radicaux de formule (III), ainsi que leurs produits d'hydrolyse.

3. Copolymères hydrosolubles selon la revendication 1 ou 2, caractérisés en ce que par hydrolyse partielle un partie, pouvant s'élever jusqu'à 60% des radicaux initiaux des formule (III), sont remplacés par des radicaux de formule (IV):

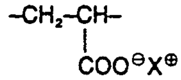 (IV)

4. Copolymères hydrosolubles selon la revendication 3, caractérisés en ce qu'ils comprennent au total 20 à 60% en poids de groupes de formules (I) et (IV).

5. Copolymères hydrosolubles selon l'une quelconque des revendications 1 à 4, caractérisés en ce qu'ils contiennent également des anions borate dans une proportion de 2,5 à 35%, en $H_3BO_3$, du poids du copolymère.

6. Copolymères hydrosolubles selon l'une quelconque des revendications 1 à 5, caractérisés en ce qu'ils ont été préparés avec application de l'effet Trommsdorff-Norrish.

7. Procédé de préparation de copolymères solubles dans l'eau qui comportent, en répartition statistique, 5 à 60% en poids de radicaux de formule (I):

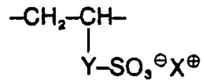 (I)

2 à 40% en poids de radicaux de formule (II):

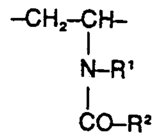 (II)

et 38 à 93% en poids de radicaux de formule (III):

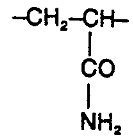 (III)

ainsi que de leurs dérivés résultant d'une hydrolyse partielle, formules dans lesquelles ou bien $R^1$ représente l'hydrogène et $R^2$ l'hydrogène ou le groupe méthyle ou éthyle, Y le radical $-CO-NH-C(CH_3)_2-CH_2-$ ou une liaison directe et $X^{\oplus}$ un cation, ou bien $R^1$ et $R^2$, qui peuvent être identiques ou différents l'un de l'autre, sont chacun l'hydrogène, un group méthyle ou éthyle ou éventuellement forment ensemble un groupe triméthylène, Y est le radical $-CO-NH-C(CH_3)_2-CH_2-$ et $X^{\oplus}$ un cation, à l'exception des copolymères hydrosolubles qui sont formés, en répartition statistique, de 5 à 60% en poids de radicaux de formule (Ia):

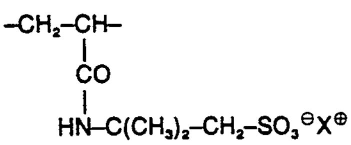 (Ia)

5 à 40% en poids de radicaux de formule (IIa):

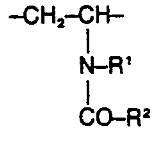 (IIa)

et 38 à 80% en poids de radicaux de formule (IIIa):

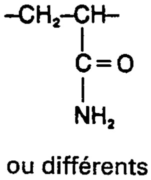 (IIIa)

formules dans lesquelles $R^1$ et $R^2$, identiques ou différents l'un de l'autre, représentent chacun l'hydrogène ou le groupe méthyle ou éthyle, et $X^{\oplus}$ un cation, procédé caractérisé en ce que, pour préparer 100 parties en

poids du copolymère, ou bien on dissout dans de l'eau 5 à 60 parties en poids d'acide 2-acrylamido-2-méthyl-propane-sulfonique de formule (Ib):

$$CH_2 = CH—CO—NH—C(CH_3)_2—CH_2—SO_3H \qquad (Ib)$$

ou d'acide vinylsulfonique de formule (Ic)

$$CH_2 = CH—SO_3H \qquad (Ic)$$

on neutralise avec une base l'acide sulfonique puis on ajoute 2 à 40 parties en poids d'un vinylacylamide de formule (IIb):

$$CH_2=CH-\overset{\overset{R^1}{|}}{N}-CO-R^2 \qquad (IIb)$$

$R^1$ représentent l'hydrogène et $R^2$ l'hydrogène ou le groupe méthyle ou éthyle, et 38 à 93 parties en poids d'acrylamide, ou bien, toujours pour obtenir 100 parties en poids du copolymère, on dissout dans de l'eau 5 à 60 parties en poids d'acide 2-acrylamido-2-méthyl-propane-sulfonique de formule (Ib):

$$CH_2 = CH—CO—NH—C(CH_3)_2—CH_2—SO_3H \qquad (Ib)$$

on neutralise l'acide sulfonique avec une base puis ajoute 2 à 40 parties en poids d'un vinylacylamide de formule (IIb):

$$CH_2=CH-\overset{\overset{R^1}{|}}{N}-CO-R^2 \qquad (IIb)$$

$R^1$ et $R^2$, identiques ou différents l'un de l'autre étant l'hydrogène ou le groupe méthyle ou éthyle ou le cas échéant formant ensemble un groupe triméthylène, et 38 à 93 parties en poids d'acrylamide, ou déclenche la polymérisation de manière connue et on l'effectue entre 0 et 130°C, et on saponifie encoure partiellement les copolymères formés pendant ou aprés la réaction de polymérisation, ou encore, si aucune saponification partielle n'a été effectuée, on satisfait à l'une au moins des conditions suivantes:

1) on utilise de l'acide vinylsulfonique dans la polymérisation, ou bien
2) on utilise le vinylacylamide de formule (IIb) dans une proportion de 2 à 5 parties en poids, ou bien
3) on utilise l'acrylamide en une proportion de 80 à 93 parties en poids, ou encore
4) dans le vinylacylamide de formule (IIb), $R^1$ et $R^2$ forment ensemble un groupe triméthylène.

8. Procédé selon la revendication 7, caractérisé en ce que la polymérisation est effectuée avec application de l'effett Trommsdorff-Norrish.

9. Produit pour l'extraction d'huile de sables ou roches pétrolifères, comprenant une solution aqueuse de 20 à 5000 ppm d'un copolymère hydrosoluble selon la revendication 1.

10. L'emploi d'une solution aqueuse d'un copolymère hydrosoluble selon la revendication 1 pour l'extraction d'huile de sables ou roches pétrolifères.